# EUROPEAN PATENT SPECIFICATION

(11) **EP 1 575 190 B1**
(45) Date of publication and mention of the grant of the patent: **17.12.2008**
(21) Application number: 05251309.0
(22) Date of filing: 04.03.2005
(51) Int. Cl.: H04B 7/26, H04B 7/212

(54) **Dynamically setting and changing a TDMA slotting structure to accomodate different call types**
Verfahren zur dynamischen Regelung einer TDMA Zeitschlitzstruktur zur Unterstützung unterschiedlicher Anruftypen
Procédé de réglage dynamique des intervalles temporels d'un système AMRT permettant l'établissement d'appels de différents types

(30) Priority: 12.03.2004 US 799551
(43) Date of publication of application: 14.09.2005
(73) Proprietor: MOTOROLA, INC., Schaumburg, IL 60196 (US)
(72) Inventor: Bohn, Thomas B., McHenry, Illinois 60050 (US); Biggs, Robert A., Evanston, Illinois 60201 (US); Muri, David L., Sunrise, Florida 33322 (US); Newberg, Donald G., Hoffman Estates, Illinois 60195 (US)
(74) Representative: McLeish, Nicholas Alistair Maxwell

(56) References cited:
- EP-A- 0 644 702
- EP-A- 1 065 808
- GB-A- 2 321 160
- PATENT ABSTRACTS OF JAPAN vol. 2002, no. 12, 12 December 2002 (2002-12-12) & JP 2002 232939 A (HITACHI KOKUSAI ELECTRIC INC), 16 August 2002 (2002-08-16)
- ELLIOTT P W ET AL: "Supporting diverse services in a microcellular TDMA system" 1993, , PAGE(S) 28-1 , XP006519303 * the whole document *

## Description

### Field of the Invention

The present invention relates generally to dynamically setting and changing a TDMA slotting structure to accommodate different call types.

### Background of the Invention

The simultaneous support of multiple call types in a time division multiple access (TDMA) mobile radio system is not always possible when the slotting structure for the inbound/outbound channels is static or the same for all requested call types. In these systems an inbound channel is used for communications from the subscriber unit to the fixed end while an outbound channel is used for transmissions from the fixed end to the subscriber unit. Typically, radio frequency (RF) half duplex radios are used in TDMA systems for low-cost and extended battery life. An RF half duplex radio can inherently support half duplex calls (from the user's perspective), and can also support full duplex calls (from the user's perspective) by use of time division duplex (TDD).

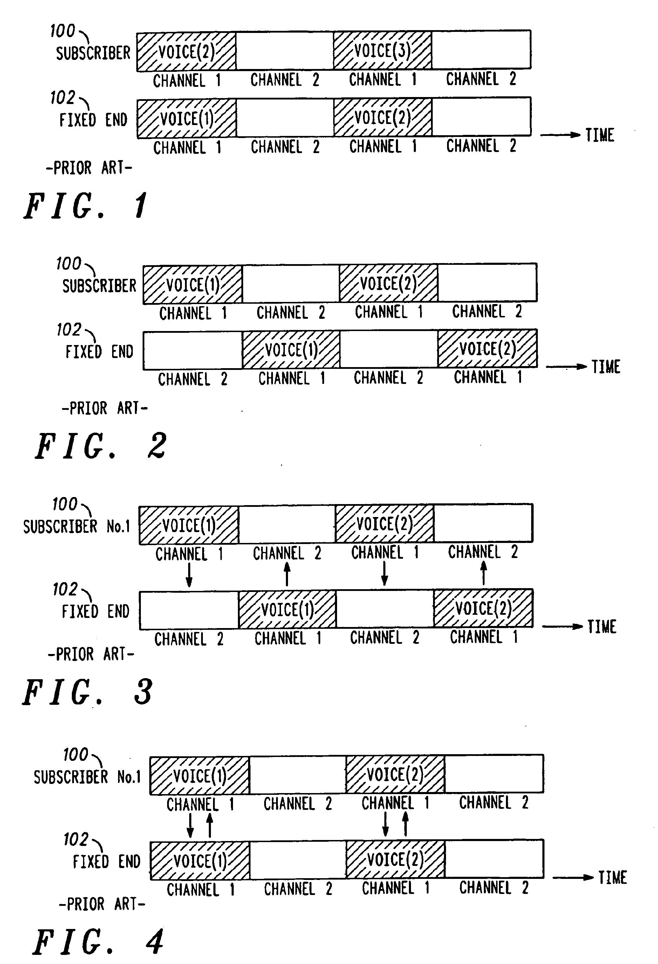

Two types of slotting structures for the inbound/outbound channels exist for a TDMA system. The first type of slotting structure is referred to as an aligned slotting structure, as illustrated in FIG. 1 for a two-slot TDMA system. In the aligned slotting structure, the inbound and outbound slots of a call are aligned in time. When applicable, the traffic is repeated an even multiple of time slots later as indicated by the numbering of the voice burst (i.e., voice(2) from the subscriber 100 is repeated by the fixed end 102 two slots after its initial transmission). The second type of slotting structure is referred to as an offset slotting structure, as illustrated in FIG. 2. In the offset slotting structure, the inbound and outbound slots are not aligned in time. When applicable, the traffic is repeated an odd multiple of time slots later. (i.e., voice(2) from the subscriber 100 is repeated by the fixed end 102 one slot after its initial transmission)

Typical requested call types from a subscriber in a mobile radio system comprise subscriber-to-subscriber (individual) calls, subscriber-to-multiple subscribers (talk group) calls, and subscriber-to-fixed end (telephone interconnect or console) calls. Group calls are half duplex (unidirectional) calls, while calls to an individual subscriber or the fixed end can be a half duplex (unidirectional) call or a full duplex (bi-directional) call that is managed using TDD channel access. Since the subscribers do not transition between transmit and receive on a burst-by-burst basis, half duplex calls are not tied to a particular inbound/outbound timing relationship, and as a consequence, can use either slotting structure. Full duplex calls (using TDD) cannot use an arbitrary slotting structure; a TDD call to the fixed end must use the offset slotting structure to allow the RF half duplex radio to transition between transmit and receive modes.

The slotting structure for a subscriber-to-fixed end TDD call is illustrated in FIG. 3 where subscriber #1 100 transmits an inbound voice stream and the fixed end 102 transmits an independent outbound voice stream. The offset slotting structure is required for a TDD subscriber unit to transmit inbound voice on one slot and receive outbound voice on the next slot. If, however, the TDMA communications system was configured for an aligned slotting structure, as illustrated in FIG. 4, the subscriber #1 100 would be forced to choose between transmitting and receiving because both inbound and outbound transmissions occur simultaneously.

A variant of the full duplex call uses one channel for voice and one channel for control/status information during a subscriber-to-fixed end speakerphone call. The control information dictates which path contains voice (either inbound or outbound) and which path contains control/status information. The control/status information is on the opposite path as the voice information.

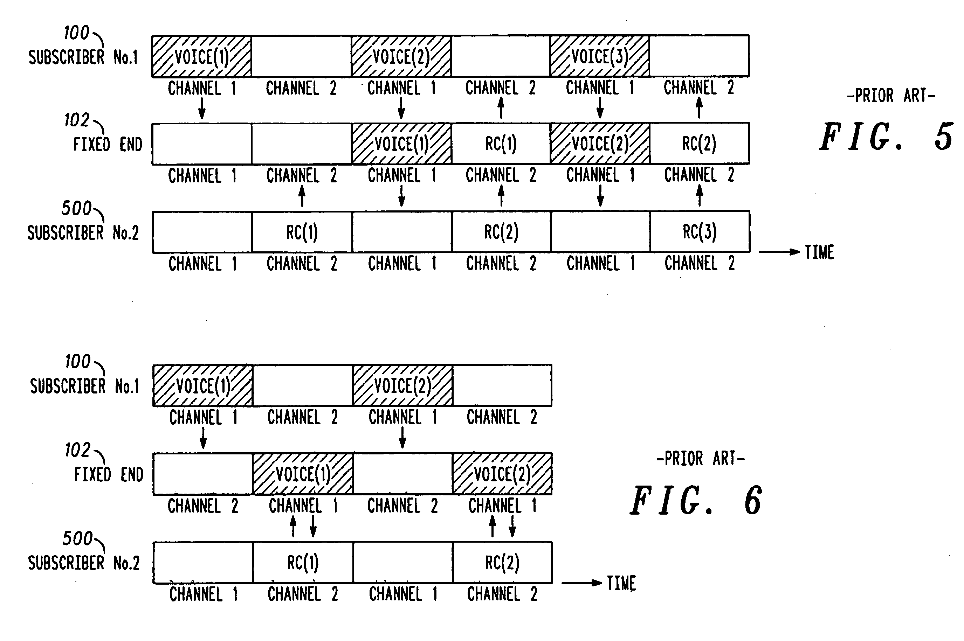

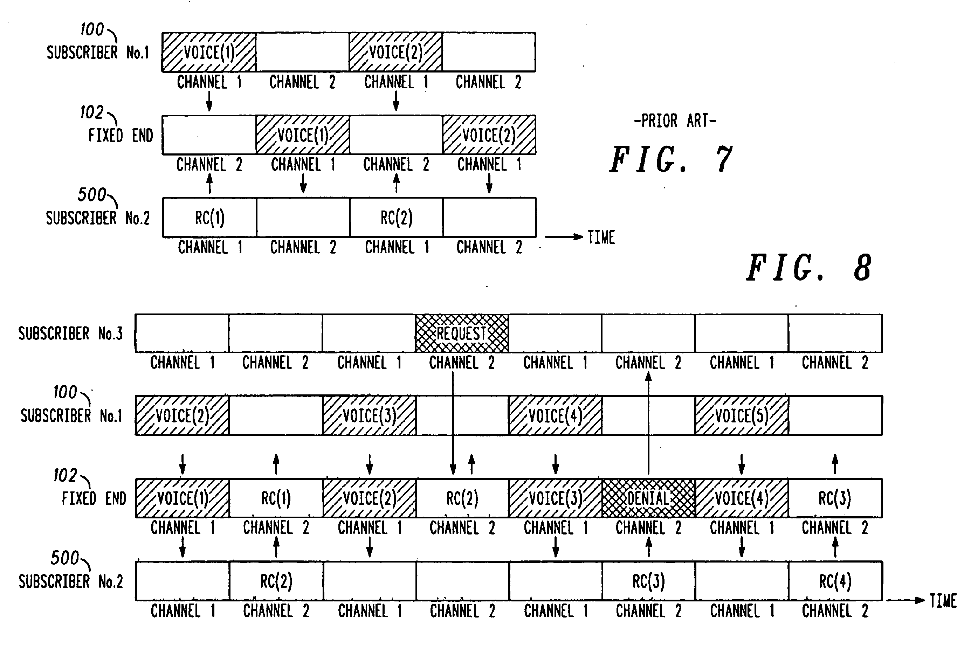

The slotting structure for a half duplex subscriber unit-to-subscriber unit call with reverse channel signaling is illustrated in FIG. 5 where subscriber #1 100 transmits an inbound voice stream, subscriber #2 500 transmits inbound reverse channel signaling, and the fixed end 102 repeats both the voice and reverse channel traffic. One use of the reverse channel signaling can be used for connection assurance messages among other things. The aligned slotting structure is required for subscriber units to transmit voice on one slot and receive reverse channel signaling on the next slot. It should be noted that this mode of operation results in a two-slot repeater delay for the traffic. If, however, the TDMA communications system was configured for an offset slotting structure, as illustrated in FIGS. 6 and 7, the subscriber #2 500 would be forced to choose between transmitting and receiving because both inbound and outbound transmissions occur simultaneously (as shown in FIG. 6); or alternatively, the inbound voice traffic and the inbound reverse channel traffic may attempt to use the same slot, resulting in a collision at the repeater (as shown in FIG. 7).

Thus, there exists a need for dynamically setting and changing a TDMA slotting structure to accommodate different call types.

### Brief Description of the Figures

A preferred embodiment of the invention is now described, by way of example only, with reference to the accompanying figures in which:
FIG. 1 (prior art) illustrates an aligned slotting structure for a two-slot TDMA system;
FIG. 2 (prior art) illustrates an offset slotting structure for the two-slot TDMA system;
FIG. 3 (prior art) illustrates the slotting structure for a subscriber unit-to-fixed end TDD call;
FIG. 4 (prior art) illustrates the slotting structure that does not support a subscriber unit-to-fixed end TDD call;
FIG. 5 (prior art) illustrates the slotting structure for a half duplex subscriber unit-to-subscriber unit call with reverse channel signaling;
FIG. 6 (prior art) illustrates the slotting structure that does not support a half duplex subscriber unit-to-subscriber unit call with reverse channel signaling;
FIG. 7 (prior art) illustrates the slotting structure that does not support a half duplex subscriber unit-to-subscriber unit call with reverse channel signaling;
FIG. 8 illustrates a second requested call type being denied due to lack of an available channel in the TDMA communications system in accordance with the present invention;
FIG. 9 illustrates a second requested call type being denied due to lack of an available channel in the TDMA communications system in accordance with the present invention;
FIG. 10 illustrates a second requested call type being granted with no change to the existing slotting structure in accordance with the present invention;
FIG. 11 illustrates a second requested call type being granted by dynamically changing the existing slotting structure in accordance with the present invention; and
FIG. 12 illustrates a second requested call type being granted with no change to the existing slotting structure in accordance with the present invention.

### Detailed Description of the Preferred Embodiment

The present invention is defined by appended independent claim 1. The present invention provides a dynamic slotting structure for the inbound and outbound channels to accommodate different call types in a TDMA communications system. The present invention allows the fixed end 102 to dynamically determine the slotting structure of the inbound and outbound channels based on a first requested call type from a first subscriber unit 100. The present invention further allows the fixed end 102 to dynamically change the existing slotting structure on the inbound and outbound channels based on a second requested call type from a second subscriber unit 500 as well as the existing slotting structure. Optionally, the fixed end 102 may dynamically change the slotting structure of the inbound and outbound channels based on a priority associated with the second requested call type. Each subscriber unit 100, 500 dynamically learns the existing slotting structure of the inbound and outbound channels during call setup and/or during the call based on signaling received from the fixed end 102. Let us now describe the present invention in greater detail by referring to the figures. It will be appreciated that for simplicity and clarity of illustration, elements shown in the figures have not necessarily been drawn to scale. For example, the dimensions of some of the elements are exaggerated relative to each other. Further, where considered appropriate, reference numerals have been repeated among the figures to indicate identical elements.

A requested call type from a subscriber unit implies (or states) a required or preferred slotting structure for the inbound/outbound channels. Some examples of these call type requests are, but not limited to, the following: a subscriber unit telephone interconnect TDD call, a subscriber unit-to-wireline console TDD call, a subscriber unit-to-subscriber unit half duplex call with reverse channel signaling, a subscriber unit-to-talkgroup half duplex call, a subscriber unit-to-subscriber unit half duplex call without reverse channel signaling, or the like. As will be shown, the subscriber unit telephone interconnect TDD call and the subscriber unit-to-wireline console TDD call must use the offset slotting structure for the inbound/outbound channels, while the subscriber unit-to-subscriber unit half duplex call with reverse channel signaling must use the aligned slotting structure for the inbound/outbound channels. Since they are unidirectional calls where the RF subscriber either transmits or receives but not both, subscriber unit-to-talkgroup half duplex call and the subscriber unit-to-subscriber unit half duplex call without reverse channel signaling can use either the aligned slotting structure or the offset slotting structure for the inbound/outbound channels, however, the aligned slotting structure is preferred in accordance with the preferred embodiment of the present invention in order to reduce inbound to outbound repeat latency.

In accordance with the present invention, the fixed end 102 dynamically sets the slotting structure of the TDMA communication system based on a first requested call type for a first call. In the preferred embodiment, if the first requested call type could be supported by either the aligned slotting structure or the offset slotting structure, the fixed end 102 sets the slotting structure of the channels to the preferred slotting structure for that particular call. When a second requested call type for a second call is received, the fixed end 102 either grants or denies the second call depending on the first requested call type for the first call and/or the second requested call type for the second call. Let us look at some examples as to when the fixed end 102 grants or denies the second call in accordance with the present invention. For ease of explanation, the following example assumes a 2:1 TDMA communications system, however, other slotting ratios may be used in the TDMA communications system and still remain within the scope of the present invention.

In a first example, if the first requested call type requires both slots in the 2:1 TDMA communications system, the fixed end 102 denies the second call, regardless of the second requested call type for the second call. FIG. 8 illustrates one of the ways in which the situation depicted in this first example arises; for example, if the first call is a subscriber unit-to-subscriber unit half duplex call from subscriber #1 100 to subscriber #2 500 with the first TDMA channel carrying voice traffic information and the second TDMA channel carrying reverse channel signaling from subscriber #2 500 to subscriber #1 100.

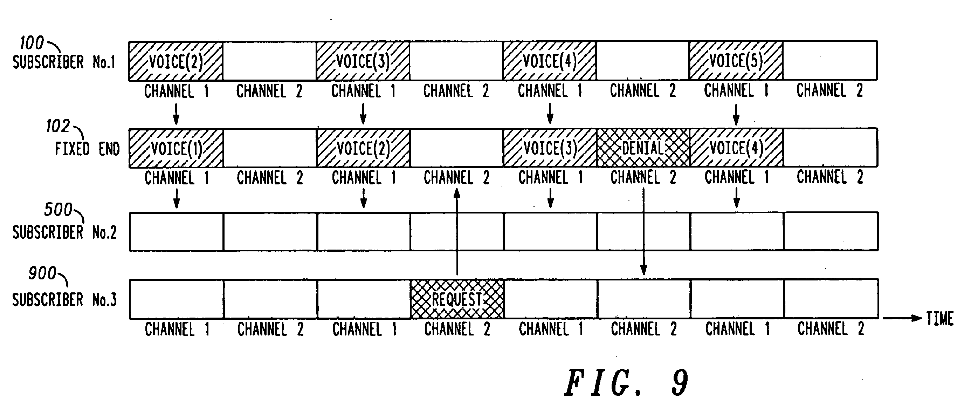

In a second example, if the second requested call type from subscriber #3 900 requires both slots in the 2:1 TDMA communications system, and the first call is currently occupying one of the two slots, the fixed end 102 denies the second call. FIG. 9 illustrates one of the ways in which the situation depicted in this second example arises; for example, if the second requested call type is a subscriber unit-to-subscriber unit call with reverse channel signaling.

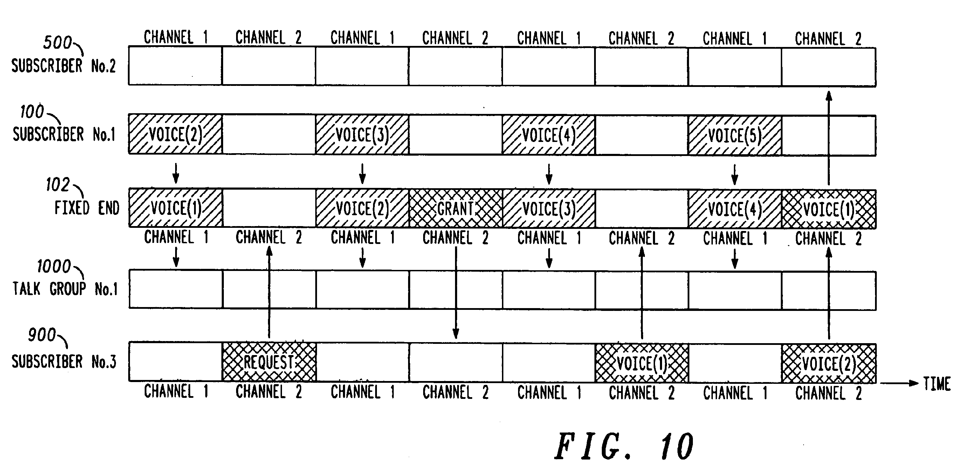

In a third example, if the slotting structure required for the second requested call type is the same as the existing slotting structure supporting the first requested call type, and both the first and second requested call types require only one channel each, the fixed end 102 grants the second call. FIG. 10 illustrates one of the ways in which the situation depicted in this third example arises. For example, if the first requested call type is a subscriber unit-to-talk group half-duplex call from subscriber #1 100 to talk group #1 1000 and the second requested call type is a subscriber unit-to-subscriber unit half-duplex call from subscriber #3 900 to subscriber #2 500.

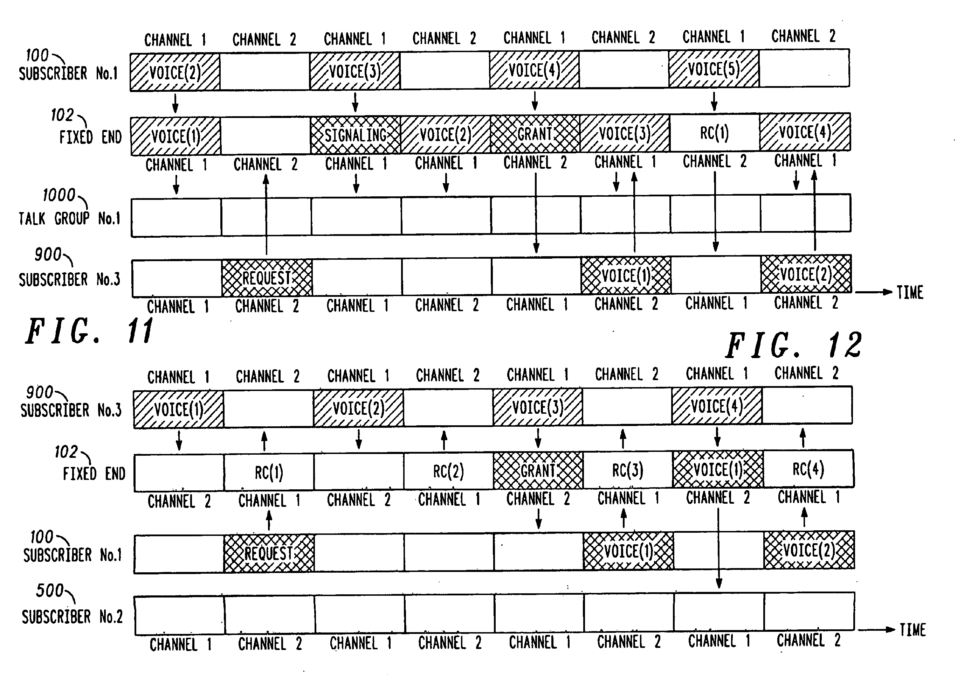

In a fourth example, if the slotting structure required for the second requested call type is different than the existing slotting structure supporting the first requested call type, and the first requested call type can be supported by either slotting structure (i.e., the aligned slotting structure or the offset slotting structure), the fixed end 102 dynamically changes the existing slotting structure to the slotting structure required for the second requested call type and grants the second call. FIG. 11 illustrates one of the ways in which the situation depicted in this fourth example arises. For example, if the first requested call type is a subscriber unit-to-talk group half-duplex call from subscriber #1 100 to talk group #1 1000 and the second requested call type is a subscriber unit-to-console half-duplex call from subscriber #3 900 to the fixed end 102 with reverse channel signaling.

In a fifth example, if the preferred slotting structure for the second requested call type is different than the existing slotting structure supporting the first requested call type, and the second requested call type can be supported by either slotting structure, the fixed end 102 grants the second call with the existing slotting structure. FIG. 12 illustrates one of the ways in which the situation depicted in this fifth example arises. For example, if the first requested call type is a subscriber unit-to-console half-duplex call from subscriber #3 900 to the fixed end 102 with reverse channel signaling and the second requested call is a subscriber unit-to-subscriber unit half-duplex call from subscriber # 1 100 to subscriber #2 500.

Thus, the present invention allows the fixed end 102 to set the slotting structure based on the first requested call type, and subsequently change the existing slotting structure (i.e., the slotting structure that was previously set to support the first requested call type) to accommodate as many simultaneous calls as possible.

In an alternative embodiment, a priority rating is taken into consideration when the second call is received in the examples above. In other words, the fixed end 102 may consider the priority rating when determining whether to grant or deny the second requested call type. The priority rating may be applied to the subscriber unit, the subscriber user and/or the requested call type. For ease of explanation, the following examples will assume that the priority rating applies to the requested call type. In the examples above, it is assumed that the first requested call type has a higher priority rating than the second requested call type. In the following modifications to the above examples, however, let us assume that the second requested call type has a higher priority rating than the first requested call type. With the second requested call type having a higher priority rating then the first requested call type, the outcome of the first and second (and optionally the fifth) examples differ, while the outcome of third and fourth examples remain the same as above. Let us now describe how the outcomes of the first, second and fifth examples differ from the outcomes described above.

In the first example above, if the first requested call type is currently using both slots in a 2:1 TDMA communications system, and the second requested call type has a higher priority rating than the first requested call type, the fixed end 102 terminates the first call and grants the second call.

In the second example above, if the second requested call type requires both slots in the 2:1 TDMA communications system, and the first call is currently occupying one of the two slots, and the second requested call type has a higher priority rating than the first requested call type, the fixed end 102 terminates the first call and grants the second call.

In the fifth example above, if the preferred slotting structure for the second requested call type is different than the existing slotting structure supporting the first requested call type, and the first requested call type can be supported by either slotting structure, the fixed end 102 dynamically changes the existing slotting structure to the preferred slotting structure of the second requested call type and grants the second call. If, however, the first requested call type cannot be supported by either slotting structure, and the second requested call type can be supported by either slotting structure, it is preferred to grant the second requested call type with the existing slotting structure as described above to accommodate both calls simultaneously in the system.

Thus, the present invention allows, for example, a two-way radio system employing a TDMA protocol to accommodate calls that require an offset slotting structure (e.g., a TDD subscriber-to-telephone interconnect call) and an aligned slotting structure (e.g., a subscriber-to-subscriber half-duplex call with reverse channel signaling). Additionally, the present invention improves the spectral efficiency of the inbound/outbound channels by dynamically changing the slotting structure during call setup and/or during a call to accommodate a mixture of call types and as many simultaneous calls as possible.

It should be understood that the invention is not limited by the foregoing description, but embraces all such alterations, modifications and variations in accordance with the scope of the appended claims.

## Claims

1. A method in a time division multiple access system, the method comprising the steps of:
receiving a first requested call type;
setting a first slotting structure as an existing slotting structure for inbound and outbound channels based on the first requested call type, **characterized in that** the first slotting structure is selected from one of the inbound and outbound channels being aligned in time and the inbound and outbound channels being offset in time.

2. The method of claim 1 further comprising the steps of:
receiving a second requested call type for a second call; and
denying the second call if there are not enough available channels in the system to support the second requested call type.

3. The method of claim 1 further comprising the steps of:
receiving a second requested call type; and
determining whether the second requested call type can be supported by the existing slotting structure.

4. The method of claim 3 further comprising the step of, if the second requested call type can be supported by the existing slotting structure, granting the second requested call type if there are enough available channels in the system to support the second requested call type; otherwise denying the second requested all type.

5. The method of claim 3 further comprising the steps of, if the second requested call type cannot be supported by the existing slotting structure:
determining whether the first requested call type can be supported by a second slotting structure required to support the second requested call type, wherein the second slotting structure is selected from one of the inbound and outbound channels being aligned in time and the inbound and outbound channels being offset in time; and
if the first requested call type can be supported by the second slotting structure, changing the existing slotting structure to the second slotting structure, and granting the second requested call type.

6. The method of claim 5 further comprising the step of signaling the first subscriber of the second slotting structure if the first requested call type can be supported by the second slotting structure.

7. The method of claim 1 further comprising the steps of:
receiving a second requested call type for a second call;
determining that the second requested call type is assigned a higher priority than the first requested call type; and
if the second requested call type cannot be supported by the existing slotting structure, dynamically changing the existing slotting structure to a second slotting structure that supports the second requested call type, and granting the second requested call type, wherein the second slotting structure is selected from one of the inbound and outbound channels being aligned in time and the inbound and outbound channels being offset in time.

8. The method of claim 7 further comprising the step of terminating the first requested call type if the first requested call type cannot be supported by the second slotting structure.

9. The method of claim 8 further comprising the steps of:
determining a number of available channels in the system; and
if there are not enough available channels in the system to support the second requested call type, terminating the first requested call type.

10. The method of claim 1 wherein the first requested call type is selected from a group comprising: a subscriber unit telephone interconnect TDD call, a subscriber unit-to-wireline console TDD call, a subscriber unit-to-subscriber unit half duplex call with reverse channel signaling, a subscriber unit-to-talkgroup half duplex call, and a subscriber unit-to-subscriber unit half duplex call without reverse channel signaling.

## Patentansprüche

1. Verfahren in einem TDMA bzw. Zeitmultiplex-System, wobei das Verfahren die folgenden Schritte umfasst:
Empfangen einer ersten angeforderten Anrufart;
Einstellen einer ersten Schlitzstruktur als eine bestehende Schlitzstruktur für ankommende und abgehende Kanäle basierend auf der ersten angeforderten Anrufart, **dadurch gekennzeichnet, dass** die erste Schlitzstruktur aus einem von zeitlich gleich ausgerichteten ankommenden und abgehenden Kanälen und zeitlich versetzten ankommenden und abgehenden Kanälen ausgewählt wird.

2. Verfahren nach Anspruch 1, welches des Weiteren die folgenden Schritte aufweist:
Empfangen einer zweiten angeforderten Anrufart für einen zweiten Anruf; und
Ablehnen des zweiten Anrufs, wenn nicht genug verfügbare Kanäle in dem System vorhanden sind, um die zweite angeforderte Anrufart zu unterstützen.

3. Verfahren nach Anspruch 1, welches des Weiteren die folgenden Schritte aufweist:
Empfangen einer zweiten angeforderten Anrufart; und
Bestimmen, ob die zweite angeforderte Anrufart von der bestehenden Schlitzstruktur unterstützt werden kann.

4. Verfahren nach Anspruch 3, welches des Weiteren den folgenden Schritt aufweist: wenn die zweite angeforderte Anrufart von der bestehenden Schlitzstruktur unterstützt werden kann, Gewähren der zweiten angeforderten Anrufart, wenn genügend verfügbare Kanäle in dem System vorhanden sind, um die zweite angeforderte Anrufart zu unterstützen; ansonsten Ablehnen der zweiten angeforderten Anrufart.

5. Verfahren nach Anspruch 3, welches des Weiteren die folgenden Schritte aufweist, wenn die zweite angeforderte Anrufart von der bestehenden Schlitzstruktur nicht unterstützt werden kann:
Bestimmen, ob die erste angeforderte Anrufart von einer zweiten Schlitzstruktur unterstützt werden kann, die notwendig ist, um die zweite angeforderte Anrufart zu unterstützen, wobei die zweite Schlitzstruktur aus einem von zeitlich gleich ausgerichteten ankommenden und abgehenden Kanälen und zeitlich versetzten ankommenden und abgehenden Kanälen ausgewählt wird; und
wenn die erste angeforderte Anrufart von der zweiten Schlitzstruktur unterstützt werden kann, Wechsel der bestehenden Schlitzstruktur zu der zweiten Schlitzstruktur, und Gewähren der zweiten angeforderten Anrufart.

6. Verfahren nach Anspruch 5, welches des Weiteren den folgenden Schritt aufweist: Benachrichtigen des ersten Teilnehmers über die zweite Schlitzstruktur, wenn die erste angeforderte Anrufart von der zweiten Schlitzstruktur unterstützt werden kann.

7. Verfahren nach Anspruch 1, welches des Weiteren die folgenden Schritte aufweist:
Empfangen einer zweiten angeforderten Anrufart für einen zweiten Anruf;
Bestimmen, dass der zweiten angeforderten Anrufart eine höhere Priorität als der ersten angeforderten Rufart zugewiesen ist; und
wenn die zweite angeforderte Anrufart von der bestehenden Schlitzstruktur nicht unterstützt werden kann, dynamischer Wechsel der bestehenden Schlitzstruktur zu einer zweiten Schlitzstruktur, die die zweite angeforderte Anrufart unterstützt, und Gewähren der zweiten angeforderten Anrufart, wobei die zweite Schlitzstruktur aus einem von zeitlich gleich ausgerichteten ankommenden und abgehenden Kanälen und zeitlich versetzten ankommenden und abgehenden Kanälen ausgewählt wird.

8. Verfahren nach Anspruch 7, welches des Weiteren den Schritt des Beendens der ersten angeforderten Anrufart aufweist, wenn die erste angeforderte Anrufart nicht von der zweiten Schlitzstruktur unterstützt werden kann.

9. Verfahren nach Anspruch 8, welches des Weiteren die folgenden Schritte aufweist:
Bestimmen einer Anzahl von verfügbaren Kanälen in dem System; und
wenn nicht genügend verfügbare Kanäle zum Unterstützen der zweiten angeforderten Anrufart in dem System vorhanden sind, Beenden der ersten angeforderten Anrufart.

10. Verfahren nach Anspruch 1, **dadurch gekennzeichnet, dass** die erste angeforderte Anrufart aus einer aus Folgendem bestehenden Gruppe ausgewählt wird: ein Teilnehmereinheit-Zusammenschaltungs-TDD-Anruf, ein Teilnehmereinheit-an-Festnetzkonsole-TDD-Anruf, ein Teilnehmereinheit-an-Teilnehmereinheit-Halbduplexanruf mit umgekehrter Kanalsignalisierung; ein Teilnehmereinheit-an-Sprechgruppe-Halbduplexanruf und ein Teilnehmereinheit-an-Teilnehmereinheit-Halbduplexanruf ohne umgekehrte Kanalsignalisierung.

## Revendications

1. Procédé dans un système d'accès multiple par répartition dans le temps, le procédé comportant les étapes consistant à :
recevoir un premier type d'appel requis ;
définir une première structure d'attribution de tranches en tant qu'une structure d'attribution de tranches existante pour des canaux entrants et sortants sur la base du premier type d'appel requis, **caractérisé en ce que** la première structure d'attribution de tranches est sélectionnée à partir d'un des canaux entrants et sortants étant alignés dans le temps et des canaux entrants et sortants étant décalés dans le temps.

2. Procédé selon la revendication 1 comportant en outre les étapes consistant à :
recevoir un second type d'appel requis pour un second appel ; et
refuser le second appel s'il n'y a pas suffisamment de canaux disponibles dans le système pour prendre en charge le second type d'appel requis.

3. Procédé selon la revendication 1, comportant en outre les étapes consistant à :
recevoir un second type d'appel requis ; et
déterminer si le second type d'appel requis peut être pris en charge par la structure d'attribution de tranches existante.

4. Procédé selon la revendication 3, comportant en outre les étapes consistant à, si le second type d'appel requis peut être pris en charge par la structure d'attribution de tranches existante, octroyer le second type d'appel requis s'il y a suffisamment de canaux disponibles dans le système pour prendre en charge le second type d'appel requis ; dans la négative, refuser le second type d'appel requis.

5. Procédé selon la revendication 3, comportant en outre les étapes consistant à, si le second type d'appel requis ne peut pas être pris en charge par la structure d'attribution de tranches existante :
déterminer si le premier type d'appel requis peut être pris en charge par une seconde structure d'attribution de tranches requise pour prendre en charge le second type d'appel requis, dans lequel la seconde structure d'attribution de tranches est sélectionnée à partir d'un des canaux entrants et sortants étant alignés dans le temps et des canaux entrants et sortants étant décalés dans le temps; et
si le premier type d'appel requis peut être pris en charge par la seconde structure d'attribution de tranches, remplacer la structure d'attribution de tranches existante par la seconde structure d'attribution de tranches, et octroyer le second type d'appel requis.

6. Procédé selon la revendication 5, comportant en outre les étapes consistant à signaler, au premier abonné, la seconde structure d'attribution de tranches lorsque le premier type d'appel requis peut être pris en charge par la seconde structure d'attribution de tranches.

7. Procédé selon la revendication 1, comportant en outre les étapes consistant à :
recevoir un second type d'appel requis pour un second appel ;
déterminer que le second type d'appel requis présente une priorité affectée supérieure à celle du premier type d'appel requis ; et
si le second type d'appel requis ne peut pas être pris en charge par la structure d'attribution de tranches existante, remplacer dynamiquement la structure d'attribution de tranches existante par une seconde structure d'attribution de tranches qui prend en charge le second type d'appel requis, et octroyer le second type d'appel requis, dans lequel la seconde structure d'attribution de tranches est sélectionnée à partir d'un des canaux entrants et sortants étant alignés dans le temps et des canaux entrants et sortants étant décalés dans le temps.

8. Procédé selon la revendication 7, comportant en outre l'étape consistant à mettre fin au premier type d'appel requis lorsque le premier type d'appel requis ne peut pas être pris en charge par la seconde structure d'attribution de tranches.

9. Procédé selon la revendication 8, comportant en outre les étapes consistant à :
déterminer un nombre de canaux disponibles dans le système ; et
lorsqu'il n'y a pas suffisamment de canaux disponibles dans le système pour prendre en charge le second type d'appel requis, mettre fin au premier type d'appel requis.

10. Procédé selon la revendication 1, dans lequel le premier type d'appel requis est sélectionné dans un groupe comportant : un appel de duplexage par répartition dans le temps (TDD) d'interconnexion téléphonique d'unités d'abonné, un appel TDD d'unité d'abonné à console filaire, un appel bidirectionnel à l'alternat d'unité d'abonné à unité d'abonné avec signalisation de canal de retour, un appel bidirectionnel à l'alternat d'unité d'abonné à groupe d'appel, et un appel bidirectionnel à l'alternat d'unité d'abonné à unité d'abonné sans signalisation de canal de retour.
